# EUROPEAN PATENT SPECIFICATION

(11) **EP 1 891 150 B1**
(45) Date of publication and mention of the grant of the patent: **26.09.2012**
(21) Application number: 06755788.4
(22) Date of filing: 14.06.2006
(51) Int. Cl.: C08K 3/34, C08L 83/04

(54) **SILICONE RUBBER COMPOSITIONS**
SILIKONKAUTSCHUKZUSAMMENSETZUNGEN
COMPOSITIONS DE CAOUTCHOUC SILICONE

(30) Priority: 15.06.2005 GB 0512193
(43) Date of publication of application: 27.02.2008
(73) Proprietor: Dow Corning Corporation, Midland, Michigan 48611 (US)
(72) Inventor: LAWSON, David, South Glamorgan CF14 7AD (GB); JAMES, STEPHEN, South Glamorgan CF62 6JW (GB)
(74) Representative: Donlan, Andrew Michael
(86) International application number: PCT/GB2006/050154
(87) International publication number: WO 2006/134400

(56) References cited:
- EP-A- 0 652 255
- WO-A-2004/070102
- US-A- 4 269 753
- US-A- 4 929 664

## Description

This invention is related to silica-free filled liquid silicone rubber compositions.

An addition (hydrosilylation) cured liquid silicone rubber (LSR), often referred to as a silicone elastomer, is composed of four essential ingredients:-
a substantially linear silicone polymer,
one or more reinforcing filler(s) and optionally one or more non-reinforcing filler(s), and a cross-linking agent
a hydrosilylation catalyst.

The substantially linear silicone polymer most widely employed is a liquid polysiloxane having a maximum viscosity of about 100,000 mPa.s at 25°C. These liquid polysiloxanes generally contain repeating units of the formula:-

RₘSiO_{(4-m)/2} /2

wherein each R group is the same or different and is selected from monovalent hydrocarbon groups having from 1 to 18 carbon atoms. It is preferred that R is an alkyl or aryl group having from 1 to 8 carbon atoms, e.g. methyl, ethyl, propyl, isobutyl, hexyl, phenyl or octyl; an alkenyl group such as vinyl; or halogenated alkyl groups such as 3,3,3-trifluoropropyl. More preferably at least 50% of all R groups are methyl groups, and most preferably substantially all R groups are methyl groups. The polymer also contains R groups which are selected based on the cure mechanism desired. Typically the cure mechanism is either by means of condensation cure or addition cure, but is generally via an addition cure process. For condensation reactions, two or more R groups per molecule should be hydroxyl or hydrolysable groups such as alkoxy group having up to 3 carbon atoms. For addition reactions two or more R groups per molecule must be unsaturated organic groups, typically alkenyl or alkynyl groups, preferably having up to 8 carbon atoms. When the present composition is to be cured by an addition reaction, then it is preferred that R be alkenyl group e.g. vinyl, allyl, 1-propenyl, isopropenyl or hexenyl groups. Such polymers are well known in the art and may vary from relatively viscous materials to freely flowing liquids.

Generally, two types of fillers are used; these are usually referred to as reinforcing fillers and non-reinforcing fillers. Reinforcing fillers impart high strength to liquid silicone rubber and may comprise finely divided amorphous silica such as fumed silica and/or precipitated silica. Non-reinforcing fillers are generally used to reduce the cost of the silicone rubber composition, and generally comprise inexpensive filler materials such as ground quartz, calcium carbonate, and diatomaceous earth. Reinforcing fillers are typically used alone or together with non-reinforcing fillers. The reinforcing fillers are usually treated with organosilanes, organosiloxanes, or organosilazanes, in order to improve the physical and/or mechanical properties of the silicone rubber composition, i.e., tensile strength, compression set and heat stability of the formulated product.

Conventional high strength LSR uses fumed or precipitated silica as the primary source of reinforcing filler. A number of problems which have been identified with the use of silica fillers for reinforcing LSR. One major problem being the prohibitive cost of the fillers themselves, particularly fumed silica. Such costs have a significant effect on the cost of producing LSR compositions. Furthermore, due to the chemical nature of the silica surface, silica needs to be pretreated or treated in situ (pacification) with e.g. silazanes such as hexaalkyl disilazane or short chain siloxane diols to obtain a stable material. The in situ process necessitates the use of a high power mixing regime to:-
1. incorporate silica into the polymer,
2. complete the treatment process and
3. remove excess treating agent under vacuum.
4. All these factors add significantly to the typical cost structure of a silica filled LSR.

LSR can also be reinforced using a silicone resin. Again, however, several limitations are inherent in this approach. Resin cost is a relatively high component in total formulation costs. Also, reinforcement is quite limited and the LSRs resulting from this approach have typically found use merely in coating applications where bulk rubber properties are less important.

Typically a hydrosilylation (addition cure) type curing agent system is most widely used comprising a platinum group catalyst and a cross-linker comprising a short chain siloxane polymer having at least two silicone bonded hydrogen groups, which are available for cross-linking the unsaturated groups in the liquid polysiloxane.

Liquid silicone rubber compositions are typically stored in two part form, one part comprising polymer, filler and catalyst and the other comprising polymer, filler the silicon bonded hydrogen cross-linker and inhibitor (if required), the two parts being mixed immediately before use to prevent any unwanted curing during storage. Other optional additives such as pigments anti-adhesive agents, plasticizers, and adhesion promoters can be stored in either part unless chemically reactive with one of the other substituents in the part concerned.

Liquid silicone rubber compositions may be evaluated using various parameters including tensile strength which is the amount of force needed to break a rubber sample, elongation which is the length a rubber sample can be stretched, tear strength, which measures the resistance to tear propagation, and compression set which is the amount of force needed for the permanent deformation of a rubber sample.

WO 2004/070102 describes a coating material for coating textile fabrics, in particular airbags which comprises 15 to 30 parts by weight of a filler per 100 parts of the weight of the total composition of a filler having a Moh hardness no greater than 4.5 and a mean particle size no greater than 3.0µm. Kaolin is listed as one option out of a wide variety of inorganic compounds deemed suitable fillers but the examples are substantially directed to the use of calcium carbonate or aluminium trihydrate as the viable alternatives. This product is provided as an expandable coating for air bags and the like and has poor physical property characteristics and as such could not be used for the applications envisaged herein as the fillers used appear to provide little or no reinforcing effect.

WO 00/46302 describes a liquid silicone rubber comprising wollastonite as the filler and an optional reinforcing silica filler. However, it is to be noted that the silica filler is used in all but one example. Wollastonite is advocated in this document due to its fire retardant/char properties.

One part high consistency rubber compositions and processes for making the same have been disclosed in WO 2005/054352 which was published after the priority date of the present application in which there is provided a one part high consistency silicone rubber substantially filled with a treated kaolin. The composition consisted essentially of an organopolysiloxane gum having a viscosity of at least 1,000,000 centistokes (mm²/s), treated kaolin, a curing agent (typically an organic peroxide) and optional additives selected from the group of one or more rheology modifiers, pigments, colouring agents, anti-adhesive agents, plasticizers, adhesion promoters, blowing agents, fire retardants and desiccants. In this case the composition is substantially free of silica reinforcing fillers but may contain minimal amounts of silica (in amounts which would not confer any reinforcing properties to the bulk composition.

WO 2005/092965 which was published after the priority date of the present application discusses the use of a kaolin filler with a so-called silicone "resin". It is a specific requirement that the kaolin is treated with from 1.0 wt% to 12.0 wt% of amino or vinyl-functionalised organosilanes or amino or vinyl-functionalised organosiloxanes. However, it should be appreciated that amino-functionalised organosilanes and amino-functionalised organosiloxanes could not be used for addition (otherwise known as hydrosilylation) cured silicone rubber compositions using platinum group catalysts as described in the present invention as such amino compounds inhibit/poison platinum group catalysts.

US 6354620 describes a curable silicone based coating composition which optionally contains non-reinforcing fillers but contains no more than 3% by weight of reinforcing fillers, for use as a coating on a textile fabric (e.g. an airbag). The non-reinforcing fillers used is preferably laminar or plate-like the most preferred being talc, aluminite, carnotite, graphite, pyrophyllite or thermonite.

US Patent 4,677,141 describes a means of improving the heat stability of a pigmentable silicone elastomer comprising a vinyl terminated organopolysiloxane polymer, a silica based reinforcing filler and an organic peroxide curing agent with a white clay such as kaolin which has been pretreated with olefinic unsaturated siloxy groups. EP0057084 relates to a similar technology but again requires the presence of a reinforcing filler, in the form of silica. EP0652255 describes a curable organopolysiloxane composition containing a component (D) having from 1 to 650 parts by weight of an oil-absorbing filler prepared by impregnating (a) a porous filler with from 1% by weight based on the porous filler up to a saturation amount of (b) a volatile organic compound which is incompatible or partly compatible with the organosiloxane polymer and compatible with an organic oily substance such as hydrocarbon oils. A wide range or porous fillers is listed including kaolin. US4929664 describes a talc reinforcing agent for use with a cross-linkable silicone polymer system which has improved sag and modulus properties. A kaolin china clay bead product is used as a comparative filler. US4269753 describes siloxane compositions which can be readily converted to to elastomers but will ceramify upon firing to give flexible ceramics which include a component (D) which is a ceramic forming filler which may be selected from a wide range of materials including kaolinite.

The inventors of the present invention have found that, contrary to the general teaching of the prior art, silica fillers can be completely replaced in an otherwise standard LSR (either 1 or 2-part) formulation whilst still maintaining genuine reinforcement and hence an acceptable physical property profile.

In accordance with the present invention there is provided a silica-free liquid silicone rubber composition comprising:
an organopolysiloxane polymer comprising units of the following general formula

   RₙSiO(₄₋ₙ)/2

   each R group is the same or different and is selected from monovalent hydrocarbon groups having from 1 to about 18 carbon atoms wherein at least two R groups per molecule are either hydroxyl and/or hydrolysable groups or are unsaturated organic groups, said composition having a viscosity of from 300 to 100000 mPa.s at 25°C and
   i) from 35 to 70 parts by weight per 100 parts by weight of the total composition, of a calcined kaolin filler which is treated with one or more of the group comprising silane, silazane or short chain organopolysiloxane polymers
   ii) a cross-linking agent
   iii) a catalyst; and
   iv) optional additives selected from the group of one or more inhibitors, pigments, colouring agents, anti-adhesive agents, adhesion promoters, blowing agents, fire retardants and desiccants;
wherein the composition is reinforced by said calcined kaolin filler.

The liquid polysiloxanes generally contain repeating units of the formula:-

RₙSiO_{(4-n)/2}

wherein each R group is the same or different and is selected from monovalent hydrocarbon groups having from 1 to 18 carbon atoms;. It is preferred that R is an alkyl or aryl group having from 1 to 8 carbon atoms, e.g. methyl, ethyl, propyl, isobutyl, hexyl, phenyl or octyl; an alkenyl group such as vinyl; or halogenated alkyl groups such as 3,3,3-trifluoropropyl. More preferably at least 50% of all R groups are methyl groups, and most preferably substantially all R groups are methyl groups. The polymer also contains R groups which are selected based on the cure mechanism desired. Typically the cure mechanism is either by means of condensation cure or addition cure, but is generally via an addition cure process. For condensation reactions, two or more R groups per molecule should be hydroxyl or hydrolysable groups such as alkoxy group having up to 3 carbon atoms. For addition reactions two or more R groups per molecule must be unsaturated organic groups, typically alkenyl or alkynyl groups, preferably having up to 8 carbon atoms. When the present composition is to be cured by an addition reaction, then it is preferred that R be an alkenyl group e.g. vinyl, allyl, 1-propenyl, isopropenyl or hexenyl groups.

Preferably the organopolysiloxane polymer comprises one or more polymers which preferably have the formula R₂R₁SiO[(R₂SiO)ₓ(RR₁SiO)]_{y}SiR₂R₁ wherein each R is the same or different and is as previously described, preferably each R group is a methyl or ethyl group; R1 is an alkenyl group, preferably vinyl or hexenyl group; x is an integer and y is zero or an integer. The polymer has a viscosity of from 300 to 100000 mPa.s (prior to the addition of the other ingredients) at 25°C.

Representative organopolysiloxane polymers according to the invention include, for the sake of example, polymers of the formula Me₂ViSiO[(Me₂SiO)ₓ(MeViSiO)]_{y}SiMe₂Vi and Me₂ViSi(Me₂SiO)ₓSiMe₂Vi wherein Me represents the methyl group (-CH₃) Vi represents the vinyl group CH₂=CH-.

The most important concept in the present invention was the identification of a suitable filler which would sufficiently reinforce the LSR to be able to totally replace the usual silica based reinforcing fillers. The inventors initially sought to determine suitable fillers on the basis of their shape as typically defined by their aspect ratio, a fundamental property of fillers which ranges from 1 for a perfectly spherical (or cubical) fillers to > 1000 in the case of a long fibres.

The aspect ratios of fillers are often defined in one of two ways depending on the nature of the filler. In the case of needles/fibres shaped fillers aspect ratio is usually expressed as the ratio of particle length to diameter (UD), whilst in most other mineral fillers it is expressed as the ratio of the diameter of a circle of the same area as the face of the plate to its mean thickness (D/T). Fillers in general can be classified into several types depending on their morphology. The majority of particulate fillers have low aspect ratio of between 1 and 3. These would consist of isometric shaped particles that can be classified as either spherical or irregular. Spherical fillers would include fumed silica, glass beads, ceramic microspheres and the like. Irregular shaped materials include many widely used types of filler such as aluminium trihydrate (ATH) and calcium carbonate etc.

At higher aspect ratios i.e. where D/T is between 5 and 50, fillers particularly when between 5 and 30, are generally platy (or lamellar) in nature. Typical examples include talc, and mica as discussed in US6354620.

At aspect ratios of greater than 100 the fillers are typically fibrous and it was thought that any property enhancement would be as a result of filler particle alignment relative to the polymer and not a bulk effect.

The inventors believed that the lamellar shaped fillers might provide a sufficiently good reinforcing effect to totally replace silica fillers. Both kaolin and mica have a platy, hexagonal crystal structure. Nominal aspect ratios are in the region of 20. Talc is another example of a filler consisting of platelet species. Although less hexagonal in nature it possesses many similarities with kaolin and mica (and a very similar aspect ratio). Hence these fillers have a significant anisotropy that the inventors initially believed might provide a sufficient reinforcing effect to replace silica fillers not seen with more isometric fillers such as ATH and calcium carbonate. It was thought that these lamellar-shaped filler particles with aspect ratios of between 5 and 50, but mainly between 5 and 30 might achieve a sufficient degree of interpenetration between siloxane polymer chains to provide a suitable reinforcing effect.

Another factor influencing a filler's reinforcement potential is surface treatment. Residual functionality on a filler surface can be deactivated by means of silane, silazane or low molecular weight (MW) organopolysiloxane or stearate treatment. This can improve the material's reinforcement potential and/or storage stability and/or heat stability of the resulting compound.

As will be seen from the following examples and comparative examples surprisingly an optionally treated kaolin proved to have significantly better all round physical properties as compared to other fillers having similar lamellar type structures or acicular structured fillers such as calcium silicates for example wollastonite and pyrophylite.

Any suitable kaolin may be utilized, calcined kaolin is particularly preferred. Kaolin is well known in the art. It is an aluminium silicate which mainly comprises Al₂O₃.2SiO₂.2H₂O together with some illite and impurities. Kaolin is particularly useful because it is readily available in a white form. For the purposes of this invention "white" is to be regarded as the absence of a hue or tint of sufficient strength to prevent further pigmenting of the silicone elastomeric composition to a desired colour. Kaolin is further described in the '141 patent incorporated by reference. Preferably the kaolin is utilised in a range of from 30 to 100 parts by weight per 100 parts by weight of the total composition, more preferably 30 -70 parts by weight per 100 parts by weight of the total composition, most preferably from 35 to 70 parts by weight per 100 parts by weight of the total composition, as compositions comprising this range yield the best balance of physical properties such as tensile strength, elongation at break, tear strength, hardness and processing viscosity.

Whereas it is possible to utilise untreated kaolin in the compositions in accordance with the present invention, the inventors found that for applications where heat stability is an Important consideration, it is preferable to use a treated kaolin filler in the compositions in accordance with the present invention, in particular kaolin treated with one or more of the group comprising silane, silazane or short chain organopolysiloxane polymers. Silanes found to be most suitable for the treatment of kaolin are alkoxysilanes of the general formula R¹₍₄₋ₘ₎Si(OR)ₘ wherein m has a value of 1-3; and each R¹ is the same or different and represents a monovalent organic radical such as an alkyl group, an aryl group, or a functional group such as an alkenyl group, e.g. vinyl or allyl, or an amido group. Some suitable silanes therefore include alkyltrialkoxysilanes such as methyltriethoxysilane, methyltrimethoxysilane, phenyl trialkoxysilanes such as phenyltrimethoxysilane, or alkenyltrialkoxysilanes such as vinyltriethoxysilane, and vinyltrimethoxysilane. If desired, silazanes can also be used as treating agents for the kaolin filler, such as hexamethyldisilazane; 1,1,3,3-tetramethyldisilazane; and 1,3-divinyltetramethyldisilazane. Short chain organopolysiloxanes might for example include hydroxy terminated polydimethylsiloxanes having a degree of polymerisation of from 2 to 20, hydroxy terminated polydialkyl alkylalkenylsiloxanes having a degree of polymerisation of from 2 to 20 and organopolysiloxanes comprising at least one Si-H group, which may or may not be a terminal group. Stearates and/or stearic acid may additionally be utilised to treat the kaolin used. Preferably when treated approximately 1 to 10% by weight of the treated kaolin filler will be treating agent. Most preferably the treating agent will be from 2.5 to 7.5% weight of the treated kaolin filler.

A curing agent, as noted above, is required to cure and crosslink the composition by a hydrosilylation reaction catalyst in combination with an organohydrogensiloxane To effect curing of the present composition, the organohydrogensiloxane must contain more than two silicon bonded hydrogen atoms per molecule. The organohydrogensiloxane can contain, for example, from 4-200 silicon atoms per molecule, and have a viscosity of up to 10 Pa·s at 25 °C. The silicon-bonded organic groups present in the organohydrogensiloxane can include substituted and unsubstituted alkyl groups of 1-4 carbon atoms that are otherwise free of alkenyl or acetylenic unsaturation. Preferably each organohydrogensiloxane molecule comprises at least 3 silicon-bonded hydrogen atoms in an amount which is sufficient to give a molar ratio of Si-H groups in the organohydrogensiloxane to the total amount of alkenyl groups in polymer of from 1/1 to 10/1

Preferably the hydrosilylation (addition) cure catalyst is a platinum group metal based catalyst selected from a platinum, rhodium, iridium, palladium or ruthenium catalyst. Platinum group metal containing catalysts useful to catalyse curing of the present compositions can be any of those known to catalyse reactions of silicon bonded hydrogen atoms with silicon bonded alkenyl groups. The preferred platinum group metal for use as a catalyst to effect cure of the present compositions by hydrosilylation is platinum. Some preferred platinum based hydrosilylation catalysts for curing the present composition are platinum metal, platinum compounds and platinum complexes. Representative platinum compounds include chloroplatinic acid, chloroplatinic acid hexahydrate, platinum dichloride, and complexes of such compounds containing low molecular weight vinyl containing organosiloxanes. Other hydrosilylation catalysts suitable for use in the present invention include for example rhodium catalysts such as [Rh(O₂CCH₃)₂]₂, Rh(O₂CCH₃)₃, Rh₂(C₈H₁₅O₂)₄, Rh(C₅H₇O₂)₃, Rh(C₅H₇O₂)(CO)₂, Rh(CO)[Ph₃P](C₅H₇O₂), RhX₃[(R³)₂S]₃, (R²₃P)₂Rh(CO)X, (R²₃P)2Rh(CO)H, Rh₂X₂Y₄ HₐRh_{b}olefin_{c}Cl_{d}, Rh (O(CO)R³)₃ₙ(OH)ₙ where X is hydrogen, chlorine, bromine or iodine, Y is an alkyl group, such as methyl or ethyl, CO, C₈H₁₄ or 0.5 C₈H₁₂, R³ is an alkyl radical, cycloalkyl radical or aryl radical and R² is an alkyl radical an aryl radical or an oxygen substituted radical, a is 0 or 1, b is 1 or 2, c is a whole number from 1 to 4 inclusive and d is 2,3 or 4, n is 0 or 1. Any suitable iridium catalysts such as Ir(OOCCH₃)₃, Ir(C₅H₇O₂)₃, [Ir(Z)(En)]₂, or (Ir(Z)(Dien)]₂, where Z is chlorine, bromine, iodine, or alkoxy, En is an olefin and Dien is cyclooctadiene may also be used.

A preferred form of platinum catalyst is chloroplatinic acid, platinum acetylacetonate, complexes of platinous halides with unsaturated compounds such as ethylene, propylene, organovinylsiloxanes, and styrene; hexamethyldiplatinum, PtCl₂, PtCl₃, PtCl₄, and Pt(CN)₃. The preferred platinum-based catalyst is a form of chloroplatinic acid, either as the commonly available hexa-hydrate form or in its anhydrous form, as taught in U.S. Pat. No. 2,823,218. A more preferred platinum-based catalyst is the composition that is obtained when chloroplatinic acid is reacted with an alkenyl organosilicon compound such as divinyltetramethyldisiloxane, as disclosed in U.S. Pat. No. 3,419,593.

The platinum group metal containing catalyst may be added to the present composition in an amount equivalent to as little as 0.001 part by weight of elemental platinum group metal, per one million parts (ppm) of the composition. Preferably, the concentration of platinum group metal in the composition is that capable of providing the equivalent of at least 1 part per million of elemental platinum group metal. It is preferred that the platinum-based catalyst (C) is employed in an amount giving from 2 to 100 ppm by weight of platinum metal based on the total weight of the composition, more preferably 5 to 50ppm.

When the compositions of the present invention are to be cured by addition reaction, mixtures of Components (A), (B), and (C) may begin to cure at ambient temperature. To obtain a longer working time or "pot life", the activity of the catalyst under ambient conditions can be retarded or suppressed by addition of a suitable inhibitor.

Known platinum group metal catalyst inhibitors include the acetylenic compounds disclosed in U.S. Pat. No. 3,445,420. Acetylenic alcohols such as 2-methyl-3-butyn-2-ol and 1-ethynyl-2-cyclohexanol constitute a preferred class of inhibitors that suppress the activity of a platinum-based catalyst at 25°C. Compositions containing these catalysts typically require heating at temperatures of 70°C or above to cure at a practical rate. Room temperature cure is typically accomplished with such systems by use of a two-part system in which the crosslinker and inhibitor are in one of the two parts and the platinum is in the other part. The amount of platinum is increased to allow for curing at room temperature.

Inhibitor concentrations as low as one mole of inhibitor per mole of platinum group metal will in some instances impart satisfactory storage stability and cure rate. In other instances inhibitor concentrations of up to 500 or more moles of inhibitor per mole of platinum group metal are required. The optimum concentration for a given inhibitor in a given composition can readily be determined by routine experimentation.

When the polymer is curable via a condensation reaction, (e.g. end groups contain -OH or alkoxy units) Any suitable cross-linker which will react therewith may be used. The cross-linker used (C) in the curable composition as hereinbefore described is preferably a silane compound containing hydrolysable groups. These include one or more silanes or siloxanes which contain silicon bonded hydrolysable groups such as acyloxy groups (for example, acetoxy, octanoyloxy, and benzoyloxy groups); ketoximino groups (for example dimethyl ketoximo, and isobutylketoximino); alkoxy groups (for example methoxy, ethoxy, an propoxy) and alkenyloxy groups (for example isopropenyloxy and 1-ethyl-2-methylvinyloxy).

In the case of siloxane based cross-linkers the molecular structure can be straight chained, branched, or cyclic.

The cross-linker (C) may have two but preferably has three or four silicon-bonded condensable (preferably hydrolysable) groups per molecule. When the cross-linker is a silane and when the silane has three silicon-bonded hydrolysable groups per molecule, the fourth group is suitably a non-hydrolysable silicon-bonded organic group. These silicon-bonded organic groups are suitably hydrocarbyl groups which are optionally substituted by halogen such as fluorine and chlorine. Examples of such fourth groups include alkyl groups (for example methyl, ethyl, propyl, and butyl); cycloalkyl groups (for example cyclopentyl and cyclohexyl); alkenyl groups (for example vinyl and allyl); aryl groups (for example phenyl, and tolyl); aralkyl groups (for example 2-phenylethyl) and groups obtained by replacing all or part of the hydrogen in the preceding organic groups with halogen. Preferably however, the fourth silicon-bonded organic groups is methyl.

Silanes and siloxanes which can be used as cross-linkers include alkyltrialkoxysilanes such as methyltrimethoxysilane (MTM) and methyltriethoxysilane, alkenyltrialkoxy silanes such as vinyltrimethoxysilane and vinyltriethoxysilane, isobutyltrimethoxysilane (iBTM). Other suitable silanes include ethyltrimethoxysilane, vinyltriethoxysilane, phenyltrimethoxysilane, alkoxytrioximosilane, alkenyltrioximosilane, 3,3,3-trifluoropropyltrimethoxysilane, methyltriacetoxysilane, vinyltriacetoxysilane, ethyl triacetoxysilane, di-butoxy diacetoxysilane, phenyl-tripropionoxysilane, methyltris(methylethylketoximo)silane, vinyl-tris-methylethylketoximo)silane, methyltris(methylethylketoximino)silane, methyltris(isopropenoxy)silane, vinyltris(isopropenoxy)silane, ethylpolysilicate, n-propylorthosilicate, ethylorthosilicate, dimethyltetraacetoxydisiloxane. The cross-linker used may also comprise any combination of two or more of the above.

The amount of cross-linker present in the composition will depend upon the particular nature of the cross-linker and in particular, the molecular weight of the molecule selected. The compositions suitably contain cross-linker in at least a stoichiometric amount as compared to the polymeric material described above. Compositions may contain, for example, from 2-30 parts by weight of the total composition of cross-linker, but generally from 2 to 10 parts by weight of the total composition. Acetoxy cross-linkers may typically be present in amounts of from 3 to 8 parts by weight of the total composition preferably 4 to 6 parts by weight of the total composition whilst oximino cross-linkers, which have generally higher molecular weights will typically comprise from 3-8% parts by weight of the total composition.

When the polymer cures via a condensation reaction pathway the catalyst (D) comprises a condensation catalyst. This increases the speed at which the composition cures. The catalyst chosen for inclusion in a particular composition depends upon the speed of cure required. Any suitable condensation catalyst may be utilised to cure the composition including tin, lead, antimony, iron, cadmium, barium, manganese, zinc, chromium, cobalt, nickel, titanium, aluminium, gallium or germanium and zirconium based catalysts such as organic tin metal catalysts and 2-ethylhexoates of iron, cobalt, manganese, lead and zinc may alternatively be used. Organotin, titanate and/or zirconate based catalysts are preferred.

Silicone compositions which contain oximosilanes or acetoxysilanes generally use a tin catalyst for curing, such as triethyltin tartrate, tin octoate, tin oleate, tin naphthate, butyltintri-2-ethylhexoate, tinbutyrate, carbomethoxyphenyl tin trisuberate, isobutyltintriceroate, and diorganotin salts especially diorganotin dicarboxylate compounds such as dibutyltin dilaurate, dimethyltin dibutyrate, dibutyltin dimethoxide, dibutyltin diacetate, dimethyltin bisneodecanoate Dibutyltin dibenzoate, , stannous octoate, dimethyltin dineodeconoate, dibutyltin dioctoate. Dibutyltin dilaurate, dibutyltin diacetate are particularly preferred.

For compositions which include alkoxysilane cross-linker compounds, the preferred curing catalysts are titanate or zirconate compounds. Such titanates may comprise a compound according to the general formula Ti[OR²]₄ where each R² may be the same or different and represents a monovalent, primary, secondary or tertiary aliphatic hydrocarbon group which may be linear or branched containing from 1 to 10 carbon atoms. Optionally the titanate may contain partially unsaturated groups. However, preferred examples of R² include but are not restricted to methyl, ethyl, propyl, isopropyl, butyl, tertiary butyl and a branched secondary alkyl group such as 2,4-dimethyl-3-pentyl. Preferably, when each R² is the same, R² is an isopropyl, branched secondary alkyl group or a tertiary alkyl group, in particular, tertiary butyl. Examples include tetrabutyltitanate, tetraisopropyltitanate, or chelated titanates or zirconates. The chelation may be with any suitable chelating agent such as an alkyl acetylacetonate such as methyl or ethylacetylacetonate, suitable catalysts being. For example, diisopropyl bis(acetylacetonyl)titanate, diisopropyl bis(ethylacetoacetonyl)titanate, diisopropoxytitanium Bis(Ethylacetoacetate) and the like. Further examples of suitable catalysts are described in EP1254192 which is incorporated herein by reference. The amount of catalyst used depends on the cure system being used but typically is from 0.01 to 3 parts by weight of the total composition

In the present invention the composition is silica-free, i.e. it does not contain any precipitated, ground or fumed silica.

Optional additives which may be used, provided they do not substantially negatively effect the reinforcing effect of the selected filler., which may be utilized, depending on the final use /application of the cured composition include pigments and colouring agents, anti-adhesive agents, adhesion promoters, blowing agents, fire retardants and desiccants.

Any suitable adhesion promoter(s) may be incorporated in a composition in accordance with the present invention. These may include for example alkoxy silanes such as aminoalkylalkoxy silanes, epoxyalkylalkoxy silanes, for example, 3-glycidoxypropyltrimethoxysilane and, mercapto-alkylalkoxy silanes and γ-aminopropyl triethoxysilane, reaction products of ethylenediamine with silylacrylates. Isocyanurates containing silicon groups such as 1,3,5-tris(trialkoxysilylalkyl) isocyanurates may additionally be used. Further suitable adhesion promoters are reaction products of epoxyalkylalkoxy silanes such as 3-glycidoxypropyltrimethoxysilane with amino-substituted alkoxysilanes such as 3-aminopropyltrimethoxysilane and optionally alkylalkoxy silanes such as methyltrimethoxysilane. epoxyalkylalkoxy silane, mercaptoalkylalkoxy silane, and derivatives thereof.

Heat stabilizers may include Iron oxides and carbon blacks, Iron carboxylate salts, cerium hydrate, titania, barium zirconate, cerium and zirconium octoates, and porphyrins.

Flame retardants may include for example, carbon black, hydrated aluminium hydroxide, zinc borate and silicates such as wollastonite, platinum and platinum compounds.

Electrically conductive fillers may include carbon black, metal particles such as silver particles any suitable, electrically conductive metal oxide fillers such as titanium oxide powder whose surface has been treated with tin and/or antimony, potassium titanate powder whose surface has been treated with tin and/or antimony, tin oxide whose surface has been treated with antimony, and zinc oxide whose surface has been treated with aluminium.

Thermally conductive fillers may include metal particles such as powders, flakes and colloidal silver, copper, nickel, platinum, gold aluminium and titanium, metal oxides, particularly aluminium oxide (Al₂O₃) and beryllium oxide (BeO);magnesium oxide, zinc oxide, zirconium oxide; Ceramic fillers such as tungsten monocarbide, silicon carbide and aluminium nitride, boron nitride and diamond.

Other optional ingredients include handling agents, acid acceptors, and UV stabilisers.

Handling agents are used to modify the uncured properties of the silicone rubber such as green strength or processability sold under a variety of trade names such as SILASTIC® HA-1, HA-2 and HA-3 sold by Dow Coming corporation)

The acid acceptors may include Magnesium oxide, calcium carbonate, Zinc oxide and the like.

The ceramifying agents can also be called ash stabilisers and include silicates such as wollastonite.

Silicone rubber compositions having equivalent mechanical properties to conventional silicone rubber compositions can be produced according to the present invention in a process which involves no heat, and which avoids the necessity to use expensive fumed silica as a reinforcing filler. One major advantage in the use of optionally treated kaolin fillers is that low power mixers such as planetary and/or dissolver type mixers may be used in a simple one step mixing process.

In accordance with a second embodiment of the present invention there is provided a method of making a one part, optionally treated kaolin containing liquid silicone rubber composition consisting essentially of the steps of (i) mixing an organopolysiloxane and treated kaolin under room temperature conditions, the mixture prepared in (i) being silica-free; (ii) adding a curing agent to the mixture in (i) prior to simultaneous with or subsequent to the addition of optional additives.

In accordance with a third embodiment of the present invention there is provided a method of making a two part, liquid silicone rubber composition which contains optionally treated kaolin as filler consisting essentially of the steps of (i) mixing an organopolysiloxane and optionally treated kaolin under room temperature conditions, the mixture prepared in (i) being silica-free;

For part A of a two part composition a catalyst as hereinbefore described is then introduced into the mixture prior to simultaneous with or subsequent to the addition of optional additives.

For part B of a two part composition the organohydrogensiloxane cross-linker and where required inhibitor are blended into the mix prior to simultaneous with or subsequent to the addition of optional additives.

In the case of a two part composition any suitable ratios of part A to part B can be used, as they need to be intermixed immediately prior to use, for ease of mixing a 1 : 1 ratio of part A : part B is preferred for the sake of simplification and ease of use for the user.

The resulting compositions when combined into a single composition are preferably cured at a temperature of between 50°C and 200°C, preferably between 70°C and 150°C, for a suitable period of time (typically dependent on the temperature chosen)

It is to be understood that room temperature conditions means atmospheric pressure and a room temperature at normal ambient temperature of 20-25°C (68-77 °F). It is a major advantage in the case of the present invention that heat is not required to be added during step (i) as is required when undertaking the in-situ treatment of reinforcing fillers. As in all mixing processes the effect of mixing will generate heat but mixing in the case of the present invention will not require any additional heat input.

The conventional route of preparing an LSR compositions is to first make a silica/polymer masterbatch (thick phase) by heating a mixture of fumed silica, a treating agent for the silica, and an organopolysiloxane polymer in a high-shear mixer due to the high viscosity of the masterbatch. This is followed by a high temperature (> 150° C ) vacuum strip to remove excess treating agent. Subsequently other additives, such as cross-linkers and catalysts and optional additives such as pigments and colouring agents, heat stabilizers, anti-adhesive agents, plasticizers, secondary (non-reinforcing) fillers and adhesion promoters, are introduced into the mixer.

According to this invention, it is still possible to obtain acceptable levels of mechanical, thermal, and electrical properties, generally represented by property profiles with values such as a tensile strength of about 6 MPa; a hardness (Shore A) of 40-80; a density of 1.1-1.5 gcm ³; an elongation greater than 150 percent, most preferably greater than 175, tear strength of 10 - 15 kN/m and a compression set of less than 25% after heat ageing for 22 hours in air at 177 °C.

In the process according to the invention, the necessity of making a silicone rubber masterbatch in a high-shear mixer is avoided. Rather, a treated semi-reinforcing kaolin filler is mixed directly with the organopolysiloxane polymer to produce a finished composition with mechanical properties equivalent to conventional silicone rubber compositions. In addition, the necessity of applying heat is avoided, and the entire process can be carried out quickly and efficiently in a low-shear mixing device.

Because kaolin disperses much more easily than fumed silica in the polymer, the total mixing cycle is considerably reduced, giving much greater mixer utilization. In addition, since kaolin is a semi-reinforcing filler, it is capable of providing a finished composition having adequate mechanical properties. However, because kaolin is only semi-reinforcing, a higher loading level needs to be used than would be the case for fumed silica. On the other hand, because of the lower cost of kaolin compared to silica, it is not necessary to use a large amount of kaolin to obtain the right level of economic attractiveness for the finished composition. Preferably the ratio of treated kaolin to organopolysiloxane is from 1:2 to 2:1. Thus, one is enabled to use, for example, about 100 parts by weight of kaolin in 100 parts by weight of the organopolysiloxane e.g. polysiloxane gum, without using fumed silica.

The same level of mechanical properties can thereby be obtained as with finished compositions containing fumed silica. Furthermore, the elimination of fumed silica means that no heating is required, and the whole LSR manufacturing process can be carried out in a low-shear mixer. In addition, the incorporation time for kaolin is much higher than for fumed silica, with the result that mixer capacity is increased by utilizing the faster throughput. Finally kaolin has a much higher bulk density than fumed silica, which allows much improved ease of handling and storage.

Potential application areas for an LSR composition in accordance with the present invention include textile coatings such as airbag coatings, spark plug boots, key pads, oil resistant seals cake mould materials and general purpose seals, gaskets, diaphragms, moulded parts and high voltage insulators. One key property which the inventors have identified when using kaolin fillers as opposed to standard treated fumed silica filled liquid silicone rubber compositions is a significantly improved heat resistance (which equates to improved thermal conductivity). Such improvements provide a superior silicone elastomeric product having the ability to dissipate heat a particular advantage for applications where it is important to conduct heat quickly from hot to cold areas and thereby limit thermal degradation. Applications where this aspect is particularly important includes cookware/Bakeware applications and photocopier roller type applications.

The following examples are set provided in order to illustrate the invention in more detail.

For all examples, Tensile Strength and Elongation to Break where determined by DIN 53 504. Durometer (Shore A) Hardness was determined by ASTM D2240, and Tear Strength was determined by ASTM D624B.

### PREPARATION OF TREATED KAOLIN

Calcined kaolin having an average particle diameter of 1 micron was placed in the mixing bowl of an ordinary domestic food mixer where it was vigorously stirred and agitated. Methyltrimethoxysilane treating agent in an amount of 3.8 gram per 100 grams of kaolin Treating agent was then introduced into the mixing bowl with the kaolin, in a sufficient quantity to obtain the desired level of treatment of the kaolin surface. The mixer was left to run for 10 minutes after addition of the treating agent. The contents of the mixing bowl were then transferred to a metal tray, and placed in an air circulating oven at 120 °C for a minimum period of 12 hours.

### EXAMPLE 1

A two part composition comprising the following components were mixed on a one to one mix ratio.

### PART A:

52 parts α,ω vinyldimethyl siloxane endblocked polydimethylsiloxane, viscosity 55 Pa.s 40 parts treated kaolin (or other) filler
8 parts dimethyl, methylvinyl siloxane copolymer with vinyldimethyl siloxane endblocking units, viscosity 350 mPa.s

### Catalytic amount of platinum catalyst

### PART B

52 parts α,ω vinyldimethyl siloxane endblocked polydimethylsiloxane, viscosity 55 Pa.s 40 parts treated kaolin filler
6 parts dimethyl, methylvinyl siloxane copolymer with vinyldimethyl siloxane endblocking units, viscosity 350 mPa.s
2 parts dimethyl, methylhydrogen siloxane with methyl silsesquioxane crosslinker, viscosity 15 mPa.s
1-ethynyl cyclohexanol

The resulting composition when mixed therefore was:
52 parts a,w vinyldimethyl siloxane endblocked polydimethylsiloxane, viscosity 55 Pa.s 40 parts filler
7 parts dimethyl, methylvinyl siloxane copolymer with vinyldimethyl siloxane endblocking units, viscosity 350 mPa.s
1 part dimethyl, methylhydrogen siloxane with methyl silsesquioxane crosslinker, viscosity 15 mPa.s

### Catalytic amount of platinum catalyst

### 1-ethynyl cyclohexanol

Material was mixed and pressed into cured sheets for measurement of physical properties. Comparative examples include formulations where the treated kaolin was replaced with wollastonite, diatomaceous earth, treated alumina trihydrate (ATH), treated mica and talc as shown in Table 1.

**TABLE 1.**

| Formulation | Tensile Strength (MPa) | Tear Strength (kN/m) | Elongation at Break (%) | Filler Type at 40% of Total |
|---|---|---|---|---|
| Example 1 | 5.8 | 12.1 | 193 | Treated kaolin |
| C1 | 5.1 | 9.4 | 191 | Wollastonite |
| C2 | 5.1 | 14.0 | 170 | Diatomaceous earth |
| C3 | 3.6 | 8.0 | 248 | Treated ATH |
| C4 | 3.4 | 14.5 | 44 | Treated mica |
| C5 | 2.8 | 9.8 | 204 | Talc |

Wollastonite is a highly anisotropic filler with a similar aspect ratio kaolin. Chemically it is a form of calcium silicate. Its crystal structure is quite distinct from that of the platelet fillers already mentioned. Wollastonite consists of an acicular, needle-like crystal morphology.

The treated kaolin approach clearly yields the best balance of physical properties. Tensile strength, in particular, is always considered paramount. Kaolin reinforcement achieves a tensile strength result close to 6 MPa; this compares very favourably with typical results from a silica filled LSR of around 7 MPa and is a significant improvement on all other fillers tested.

Use of 40 parts kaolin also produces an elastomer with elongation at break of close to 200%. Again, this is a very good result, indicating that a genuinely elastomeric network has been formed in the curing process. Minimum expectations for a functional elastomer would be to achieve elongation at break properties of > 100%.

In the case of tear strength we achieve results of 10 -15 kN/m with kaolin as filler which is better than some commercial, resin reinforced LSRs.

Both wollastonite (C1) and diatomaceous earth (C2) show a reinforcement effect with tensile strength around 5 MPa. However, whilst wollastonite achieves elongation at break of close to 200% it provides much lower tear strength results and although diatomaceous earth provides a high tear strength it has a significantly lower elongation at break.

Surprisingly other fillers analysed, particularly those having platelet type structures were at best only semi-reinforcing as they provided a dramatic loss in tensile strength. In particular the use of treated mica (C4) can be highlighted; this additionally shows a dramatic loss of elongation at break to well below our 100% threshold value.

### EXAMPLE 2

Using treated kaolin we have studied the effect of variation in filler loading. Hence our model formulation has been varied to include kaolin loadings of 30, 35, 40 and 50% by weight of the total composition. Results are provided in Table 2 below:-

**TABLE 2**

| % kaolin in formulation | Tensile strength (MPa) | Tear strength (kN/m) | Elongation at break (%) |
|---|---|---|---|
| 30% | 5.2 | 7.9 | 270 |
| 35% | 5.5 | 10.7 | 251 |
| 40% | 5.8 | 12.1 | 193 |
| 50% | 6.4 | 15.7 | 110 |

A clear trend is apparent based upon changes in filler loading across this range. Tensile strength increases from around 5 to 6.5 MPa; similarly we see tear strength almost doubling as filler loading increases. On the other hand we see the opposite trend in elongation at break as the rubber network contains more and more filler compared to its polymer components. At kaolin loadings of 35-40% we obtain the best all-round balance of properties.

### COMPARATIVE EXAMPLE 3:

The effect of filler loading was also studied for a wollastonite based equivalent. Here the trends seen were as described in Table 3:

**TABLE 3**

| % wollastonite in formulation | Tensile strength (MPa) | Tear strength (kN/m) | Elongation at break (%) |
|---|---|---|---|
| 30% | 2.4 | 5.9 | 157 |
| 40% | 5.1 | 9.4 | 191 |
| 50% | 6.4 | 15.2 | 142 |

In this case it's clear that a higher filler loading is required to achieve significant reinforcement. At 30% wollastonite we have very poor tensile strength; this improves in the 40-50% range to levels similar to the kaolin filled analogues. Optimum properties in this case are achieved at 40% wollastonite loading.

### COMPARATIVE EXAMPLE 4

As a comparison with the kaolin filled LSR in Examples 1 and 2 an LSR in accordance with the teaching in WO 2004/070102 was prepared and the physical properties thereof were analysed. The sample was prepared from a two part composition consisting as follows:-

### Part A

67% by weight of dimethylvinylsiloxy-terminated dimethylsiloxane having a viscosity of 55000 mPa.s at 25°C;
24% by weight of calcium carbonate (pretreated with stearic acid)
9% by weight of dimethylvinylsiloxy terminated dimethylmethylvinylsiloxane
and an additional catalytic amount of Pt catalyst

The resulting composition having a viscosity of 120 000 mPa.s

### Part B

25.3 % by weight of dimethylvinylsiloxy terminated dimethyl siloxane
51.6 % trimethylsiloxy -terminated dimethylmethylhydrogensiloxane
0.24% by weight of ethynyl cyclohexanol
14.2 % by weight of dimethylvinylsiloxyterminated dimethylmethylvinyl siloxane
8.66 % glycidoxypropyltrimethoxysilane
The resulting composition having a viscosity of 480 mPa.s.

The two components were mixed in a ratio of 10 parts of Part A to 1 part of Part B and a sample was produced in the same way as obtained in example1 to assess the physical properties of the prepared composition.

| | |
|---|---|
| Tensile Strength | 1.1 MPa |
| Tear Strength | 3.1 kN/m |
| Elongation at Break | 180% |

Whilst such a composition is suitable for the purposes discussed in WO 2004/070102, i.e. as coating material for airbags, the above results confirm the very poor rubber reinforcement obtained with this approach, i.e. it is clear that calcium carbonate (which has a low aspect ratio) has very limited ability to provide primary reinforcement of a liquid silicone rubber composition. Tensile strength in particular is way below the 5.0-6.0 MPa target required for a high performing LSR.

Adjustment of the above composition to incorporate increased proportions of calcium carbonate filler (with equivalent reductions in polymer content) still gave poor reinforcement, further confirming the poor performance of low aspect ratio fillers in comparison to lamellar type species.

**TABLE 4**

| Calcium carbonate level | Tensile Strength (MPa) | Tear Strength (kN/m) | Elongation at Break (%) |
|---|---|---|---|
| 25% | 1.5 | 3.2 | 317 |
| 30% | 1.8 | 4.3 | 333 |
| 35% | 2.4 | 5.3 | 398 |

### COMPARATIVE EXAMPLE 5

A formulation from US 6354620 (containing 35% talc) was prepared. A standard rubber sheet was pressed in accordance with the process described in Example 1 using the following 2 part composition:-

### PART A

26.7 parts of a hydroxy terminated dimethyl, methyvinyl polysiloxane of viscosity 20 mPa.s
10.6 parts dimethylvinylsiloxy terminated dimethyl vinylmethyl polysiloxane of viscosity 15 Pa.s
11.9 parts of dimethylvinyl siloxy terminated dimethyl methylvinyl polysiloxane of viscosity 350 mPa.s
49.4 parts of talc non-reinforcing filler
1.5 parts of a platinum containing catalyst with Pt content of 0.5%

### PART B

95.7 parts trimethylsiloxy terminated polymethylhydrogensitoxane of viscosity 30 mPa.s
4.1 parts of dimethylvinyl siloxy terminated dimethyl methylvinyl polysiloxane of viscosity 350 m Pa.s
0.15 parts of ethynyl cyclohexanol
These are mixed in a ratio of 7 parts PART A to 3 parts PART B.

Physical properties were unmeasurable because this material was extremely brittle and possessed no elastomeric strength properties; its use is clearly restricted to that highlighted in US6354620, i.e. a low friction top coat that provides aesthetic benefits but no stand alone strength properties.

### EXAMPLE 6

The following example was carried out with an LSR designed to have appropriate physical properties for use in airbag coatings. It will be seen that the composition comprises a higher SiH:Vi formulation to produce material intended for use as an airbag coating (SiH:Vi of 5.1:1 compared to example 1 in which the SiH:Vi was 1.8:1).

Overall composition was as follows:
49 parts a,w vinyldimethyl siloxane endblocked polydimethylsiloxane, viscosity 55 Pa.s 40 parts treated kaolin filler
7.8 parts dimethyl, methylvinyl siloxane copolymer with vinyldimethyl siloxane endblocking units, viscosity 350 mPa.s
3 parts dimethyl, methylhydrogen siloxane with methyl silsesquioxane crosslinker, viscosity 15 mPa.s

### Catalytic amount of platinum catalyst

### Catalyst inhibitor such as 1-ethynyl cyclohexanol (ETCH)

Samples were prepared and physical properties analysed using the same tests as above giving physical properties as follows:

| | |
|---|---|
| Tensile strength | 6.0 MPa |
| Tear Strength | 14.8 kN/m |
| Elongation at Break | 191 % |

These are improved over example 1. In this case the ratio of SiH:Vi was increased to 5.1:1 (as compared to 1.8:1 in example 1 as being typical for general purpose LSR to be processed via injection moulding). Airbag coatings tend to use higher -Si-H to maximise coating-fabric adhesion.

The resulting composition was coated onto a standard airbag fabric generally referred to as 470 decitex woven polyamide airbag fabric and cured for 2 minutes at 165oC. This resulting coated fabric had a silicone coat weight of 70 grams per square metre. This yielded coated fabric properties similar to or better than existing commercial airbag coatings as can be verified from the following results obtained using three standard tests used for airbags, the flex abrasion test in accordance with ISO 5981, Tear strength in accordance with DIN 53859 T2 and edgecomb resistance in accordance with ASTM D6479-01.

**TABLE 6**

| Flex Abrasion (cycles) | Tear Strength (N) | Edgecomb Resistance (N/5cm) |
|---|---|---|
| 700 | 327 | 567 |

Interestingly, this coated fabric was tested for thermal resistance using a so-called hot rod test whereby a metal rod is heated to 450°C in an oven and then dropped onto the coated fabric surface to assess the time for this hot rod to bum through the fabric. The sample coated with the composition in accordance with the present invention gave an average burn through time of 46 seconds, which compares very favourably with commercial silicone based airbag coatings which typically varied between 3 and 20 seconds.

### EXAMPLE 7

In this example the heat stability of a kaolin filled silicone rubber composition in accordance with the present invention and as depicted in Example 1 were compared with those for a conventional Liquid Silicone Rubber sold by Dow Corning Corporation as Dow Corning® 9280/70E which comprises 25% treated fumed silica as the reinforcing filler. Table 7 compares the percentage change in both tensile strength and elongation at break between none post cure (NPC) samples and samples aged for 72 hours at 230°C post the initial cure. Table 7 additionally provides the thermal conductivity of the respective compositions.

**TABLE 7**

| Material | Conditions | Tensile Strength (MPa) | Elongation at Break (%) | Thermal conductivity (W/mK) |
|---|---|---|---|---|
| Dow Corning® 9280/70E (NPC) | NPC | 9.4 | 410 | 0.269 |
| Dow Corning® 9280/70E (NPC) | Aged for 72 hrs at 230°C | 6 | 121 | |
| | % Change After Heat Ageing | -36% | -70% | |
| Example 1 | NPC | 5.4 | 170 | 0.330 |
| Example 1 | Aged for 72 hrs at 230°C | 3.8 | 147 | |
| | % Change After Heat Ageing | -30% | -14% | |

Whilst there is less filler on a % weight basis in Dow Corning® 9280/70E any significant increase in silica filler loading will have major negative effects on the physical characteristics of resulting cured elastomeric products including the onset of crepe hardening. Hence, the use of kaolin filler enables higher filler loading whilst avoiding crepe hardening and the like and in particular such kaolin filled elastomers provide a significantly reduced loss of elongation at break after heat ageing and also provide elastomers with significantly improved thermal conductivity.

## Claims

1. A silica-free liquid silicone rubber composition comprising:
an organopolysiloxane polymer comprising units of the following general formula
RₙSiO(₄₋ₙ)/2
each R group is the same or different and is selected from monovalent hydrocarbon groups having from 1 to about 18 carbon atoms wherein at least two R groups per molecule are either hydroxyl and/or hydrolysable groups or are unsaturated organic groups, said composition having a viscosity of from 300 to 100000 mPa.s at 25°C and
i) from 35 to 70 parts by weight per 100 parts by weight of the total composition, of a calcined kaolin filler which is treated with one or more of the group comprising silane, silazane or short chain organopolysiloxane polymers
ii) a cross-linking agent
iii) a catalyst; and
iv) optional additives selected from the group of one or more inhibitors, pigments, colouring agents, anti-adhesive agents, adhesion promoters, blowing agents, fire retardants and desiccants;
wherein the composition is reinforced by said calcined kaolin filler.

2. A composition according to Claim 1 wherein the polymer comprises two or more alkenyl groups, the cross-linking agent is an organohydrogensiloxane containing more than two silicon bonded hydrogen atoms per molecule and the catalyst is a hydrosilylation catalyst.

3. A composition according to any preceding claim wherein the kaolin comprises a kaolin treated with an alkoxysilane of the formula R₍₄₋ₙ₎Si(OR)ₙ wherein n has a value of 1-3; and R is an alkyl group, an aryl group, or an alkenyl group.

4. A composition according to Claim 3 in which the alkoxysilane is a compound selected from the group consisting of methyltriethoxysilane, methyltrimethoxysilane, phenyltrimethoxysilane, vinyltriethoxysilane, and vinyltrimethoxysilane.

5. A method of making a one part, liquid silicone rubber composition in accordance to any preceding claim consisting essentially of the steps of (i) mixing an organopolysiloxane and treated kaolin under room temperature conditions, the mixture prepared in (i) being silica-free; (ii) adding a cross-linker and catalyst to the mixture in (i) prior to simultaneous with or subsequent to the addition of optional additives.

6. A method of making a two part, liquid silicone rubber composition in accordance with any one of claims 1 to 4 consisting essentially of the steps of (i) mixing an organopolysiloxane and optionally treated kaolin under room temperature conditions, the mixture prepared in (i) being silica-free; and then:
(i) for part A of a two part composition a catalyst as hereinbefore described is then introduced into the mixture prior to simultaneous with or subsequent to the addition of optional additives;
(ii) for part B of a two part composition the organohydrogensiloxane cross-linker and where required inhibitor are blended into the mix prior to simultaneous with or subsequent to the addition of optional additives.

7. Use of an LSR composition in accordance with any one of claims 1 to 4 in textile coatings such as airbag coatings, spark plug boots, key pads, oil resistant seals cookware, bakeware and general purpose seals, gaskets, diaphragms, moulded parts and high voltage insulators.

## Patentansprüche

1. Eine von Siliciumdioxid freie flüssige Silicongummizusammensetzung, die Folgendes beinhaltet:
ein Organopolysiloxanpolymer, das Einheiten der folgenden Allgemeinformel beinhaltet
RₙSiO(₄₋ₙ)/2
wobei jede R-Gruppe gleich oder unterschiedlich ist und aus monovalenten Kohlenwasserstoffgruppen ausgewählt ist, die von 1 bis etwa 18 Kohlenstoffatomen aufweisen, wobei mindestens zwei R-Gruppen pro Molekül entweder Hydroxylgruppen und/oder hydrolysierbare Gruppen oder ungesättigte organische Gruppen sind, wobei die Zusammensetzung eine Viskosität von 300 bis 100000 mPa.s bei 25 °C aufweist und
i) von 35 bis 70 Gewichtsteile pro 100 Gewichtsteile der Gesamtzusammensetzung eines calcinierten Kaolinfüllstoffs, der mit einem oder mehreren der Gruppe, die Silan, Silazan oder Kurzketten-Organopolysiloxanpolymere beinhaltet, behandelt ist
ii) ein Vernetzungsmittel
iii) einen Katalysator; und
iv) optionale Zusatzstoffe, ausgewählt aus der Gruppe von einem oder mehreren Hemmstoffen, Pigmenten, Farbstoffen, Anti-Haft-Stoffen, Haftmitteln, Treibmitteln, flammhemmenden Mitteln und Trockenmitteln;
wobei die Zusammensetzung durch den calcinierten Kaolinfüllstoff verstärkt wird.

2. Zusammensetzung gemäß Anspruch 1, wobei das Polymer zwei oder mehr Alkenylgruppen beinhaltet, das Vernetzungsmittel ein Organohydrogensiloxan ist, das mehr als zwei siliciumgebundene Wasserstoffatome pro Molekül enthält, und der Katalysator ein Hydrosilylierungskatalysator ist.

3. Zusammensetzung gemäß einem der vorhergehenden Ansprüche, wobei das Kaolin ein mit einem Alkoxysilan der Formel R₍₄₋ₙ₎Si(OR)ₙ behandeltes Kaolin beinhaltet, wobei n einen Wert von 1-3 aufweist und R eine Alkylgruppe, eine Arylgruppe oder eine Alkenylgruppe ist.

4. Zusammensetzung gemäß Anspruch 3, bei der das Alkoxysilan eine Verbindung, ausgewählt aus der Gruppe, bestehend aus Methyltriethoxysilan, Methyltrimethoxysilan, Phenyltrimethoxysilan, Vinyltriethoxysilan und Vinyltrimethoxysilan, ist.

5. Ein Verfahren zum Fertigen einer flüssigen Einkomponenten-Silicongummizusammensetzung gemäß einem der vorhergehenden Ansprüche, das im Wesentlichen aus den folgenden Schritten besteht: (i) Mischen eines Organopolysiloxans und behandelten Kaolins unter Raumtemperaturbedingungen, wobei die in (i) zubereitete Mischung frei von Siliciumdioxid ist; (ii) Hinzufügen eines Vernetzers und Katalysators zu der Mischung in (i) vor der, gleichzeitig mit der oder nachfolgend auf die Zugabe optionaler Zusatzstoffe.

6. Verfahren zum Fertigen einer flüssigen Zweikomponenten-Silicongummizusammensetzung gemäß einem der Ansprüche 1 bis 4, das im Wesentlichen aus den folgenden Schritten besteht: (i) Mischen eines Organopolysiloxans und optional behandelten Kaolins unter Raumtemperaturbedingungen, wobei die in (i) zubereitete Mischung frei von Siliciumdioxid ist; und dann:
(i) wird für Teil A einer Zweikomponenten-Zusammensetzung dann ein Katalysator wie hier zuvor beschrieben vor der, gleichzeitig mit der oder nachfolgend auf die Zugabe optionaler Zusatzstoffe in die Mischung eingeführt;
(ii) werden für Teil B einer Zweikomponenten-Zusammensetzung der Organohydrogensiloxan-Vernetzer und wo erforderlich Hemmstoff vor der, gleichzeitig mit der oder nachfolgend auf die Zugabe optionaler Zusatzstoffe in das Gemisch gemischt.

7. Verwendung einer LSR-Zusammensetzung gemäß einem der Ansprüche 1 bis 4 bei Textilbeschichtungen wie etwa Airbagbeschichtungen, Zündkerzensteckern, Tastaturfeldern, ölbeständigen Dichtungen, Kochgeschirr, Backgeschirr und Universaldichtungen, Dichtringen, Membranen, Formteilen und Hochspannungsisolatoren.

## Revendications

1. Une composition de caoutchouc de silicone liquide dépourvue silice comprenant :
un polymère organopolysiloxane comprenant des unités de la formule générale suivante
RₙSiO(₄₋ₙ)/2
chaque groupe R est le même ou différent et est sélectionné dans les groupes hydrocarbures monovalents ayant de 1 à environ 18 atomes de carbone dans laquelle au moins deux groupes R par molécule sont soit des groupes hydroxyles et / ou hydrolysables, soit des groupes organiques insaturés, ladite composition ayant une viscosité allant de 300 à 100 000 mPa.s à 25 °C et
i) de 35 à 70 parties en poids pour 100 parties en poids de la composition totale, d'une charge de kaolin calcinée qui est traitée avec un ou plusieurs éléments du groupe comprenant du silane, du silazane ou des polymères organopolysiloxane à chaîne courte
ii) un agent de réticulation
iii) un catalyseur ; et
iv) des additifs facultatifs sélectionnés dans le groupe consistant en un ou plusieurs inhibiteurs, pigments colorants, agents de coloration, agents anti-adhésifs, promoteurs d'adhésion, agents d'expansion, retardateurs de combustion et dessiccatifs ;
la composition étant renforcée par ladite charge de kaolin calcinée.

2. Une composition selon la revendication 1 dans laquelle le polymère comprend deux groupes alcényles ou plus, l'agent de réticulation est un organohydrogénosiloxane contenant plus de deux atomes d'hydrogène liés au silicone par molécule et le catalyseur est un catalyseur d'hydrosilylation.

3. Une composition selon n'importe quelle revendication précédente dans laquelle le kaolin comprend un kaolin traité avec un alkoxysilane de la formule R₍₄₋ₙ)Si(OR)ₙ dans laquelle n a une valeur allant de 1 à 3 ; et R est un groupe alkyle, un groupe aryle, ou un groupe alcényle.

4. Une composition selon la revendication 3 dans laquelle l'alkoxysilane est un composé sélectionné dans le groupe consistant en méthyltriéthoxysilane, méthyltriméthoxysilane, phényltriméthoxysilane, vinyltriéthoxysilane, et vinyltriméthoxysilane.

5. Une méthode pour réaliser une composition de caoutchouc de silicone liquide en une partie conformément à n'importe quelle revendication précédente comprenant essentiellement les étapes consistant à (i) mélanger un organopolysiloxane et du kaolin traité dans des conditions de température ambiante, le mélange préparé en (i) étant dépourvu de silice ; (ii) ajouter un agent réticulant et un catalyseur au mélange en (i) préalablement, simultanément ou subséquemment à l'ajout d'additifs facultatifs.

6. Une méthode pour réaliser une composition de caoutchouc de silicone liquide en deux parties conformément à une quelconque des revendications 1 à 4 comprenant essentiellement les étapes consistant à (i) mélanger un organopolysiloxane et du kaolin facultativement traité dans des conditions de température ambiante, le mélange préparé en (i) étant dépourvu de silice ; puis :
(i) pour la partie A d'une composition en deux parties un catalyseur tel que décrit précédemment ici est alors introduit dans le mélange préalablement, simultanément ou subséquemment à l'ajout d'additifs facultatifs ;
ii) pour la partie B d'une composition en deux parties l'agent réticulant organohydrogénosiloxane et, le cas échéant, un inhibiteur sont mixés dans le mélange préalablement, simultanément ou subséquemment à l'ajout d'additifs facultatifs.

7. Utilisation d'une composition LSR conformément à une quelconque des revendications 1 à 4 dans des revêtements textiles tels que des revêtements de coussins de sécurité gonflables, des coiffes de bougies, des claviers, des joints résistants à l'huile, des joints pour ustensiles, ustensiles de cuisson au four et d'utilisation générale, des joints d'étanchéité, des diaphragmes, des pièces moulées et des isolants haute tension.
